Europäisches Patentamt

European Patent Office

Office européen des brevets

(19)

(11) Publication number: **0 475 742 B1**

# EUROPEAN PATENT SPECIFICATION

(45) Date of publication of patent specification: **15.11.95**  (51) Int. Cl.⁶: **B62D 7/15**

(21) Application number: **91308297.0**

(22) Date of filing: **11.09.91**

(54) **Vehicle rear wheels steering apparatus.**

(30) Priority: **12.09.90 JP 239934/90**
**12.09.90 JP 239935/90**
**25.09.90 JP 258496/90**

(43) Date of publication of application:
**18.03.92 Bulletin 92/12**

(45) Publication of the grant of the patent:
**15.11.95 Bulletin 95/46**

(84) Designated Contracting States:
**DE FR GB**

(56) References cited:
**EP-A- 0 371 851**

**PATENT ABSTRACTS OF JAPAN vol. 013, no. 473 (M-884)26 October 1989 & JP-A-11 86 475 (TOYOTA) 25 July 1989**

**PATENT ABSTRACTS OF JAPAN vol. 10, no. 368 (M-543)(2425) 9 December 1986 & Jp-A-61 163 064 (TOYOTA) 23 July 1986**

**PATENT ABSTRACTS OF JAPAN vol. 10, no. 204 (M-499)(2260) 17 July 1986 & JP-A-61 046 763 (NISSAN) 7 March 1986**

(73) Proprietor: **Mazda Motor Corporation**
**No. 3-1, Shinchi**
**Fuchu-cho**
**Aki-gun**
**Hiroshima-ken (JP)**

Proprietor: **NSK LTD**
**6-3 Ohsaki 1-chome**
**Shinagawa-ku,**
**Tokyo (JP)**

(72) Inventor: **Takehara, Shin**
**1088-1-Ha-402, Nakashima, Takaya-cho**
**Higashi-Hiroshima-shi, Hiroshima-ken (JP)**
Inventor: **Ohmura, Hiroshi**
**5-5, Shikigaoka 6-chome**
**Hatsukaichi-shi, Hiroshima-ken (JP)**
Inventor: **Akita, Ryuya**
**19-28, Yano Nishi 5-chome, Aki-ku**
**Hiroshima-shi, Hiroshima-ken (JP)**
Inventor: **Chikuma, Isamu**
**5-8, Takahanadai 2-chome**
**Maebashi-shi, Gunma-ken (JP)**
Inventor: **Ito, Hiroyuki**
**17-1, Maehakoda-machi 2-chome**
**Maebashi-shi, Gunma-ken (JP)**

PATENT ABSTRACTS OF JAPAN vol. 6, no.
117 (M-139)(995) 30 June 1982 & JP-A-57 044
568 (HONDA) 13 February 1982

Inventor: **Eda, Hiroshi**
**1612-10, Komagata-machi**
**Maebashi-shi, Gunma-ken (JP)**

74 Representative: **Abbie, Andrew Kenneth et al**
**R.G.C. Jenkins & Co.**
**26 Caxton Street**
**London SW1H 0RJ (GB)**

## Description

This invention relates to a vehicle rear wheels steering apparatus.

In recent years rear wheels steering apparatuses for vehicles, in particular for automobiles, have been developed, and some have already been put on the market.

Fig. 7 is a sectional view of one such rear wheels steering apparatus which is disclosed in JP-A-61163064. In Fig. 7 a worm 702 is coaxially mounted to an input shaft 701, the front end of which is connected with a front wheels steering mechanism (not shown). The worm 702 engages a worm wheel 703. The worm wheel 703 is connected with a double cylinder 704 so that the axis of the worm wheel and the axis of the double cylinder intersect at right angles, and the double cylinder is adapted to tilt clockwise or counterclockwise when the worm wheel 703 rotates.

The double cylinder 704 comprises an outer cylinder 704a and an inner cylinder 704b, and the inner cylinder 704b may freely rotate relative to the outer cylinder 704a. An opening 704c is provided in a portion of the inner cylinder 704b, and a shaft 705 pivotally engages the inner cylinder at this opening 704c. The shaft 705 is mounted to the outer periphery of a rod 706, and is movable in the axial direction of the rod together with the rod 706. Both ends of the rod 706 are connected with a steering mechanism (not shown), and the vehicle wheels (not shown) are steerable by axial displacement of the rod 706. It is assumed here that when the rod 706 moves to the left, the rear wheels are steered to the left, and when the rod moves to the right, the rear wheels are steered to the right.

The rod 706 is supported for rotation about its axis, and a motor 708 drivingly rotates the rod 706 through a worm mechanism 707. When the rod 706 rotates, the shaft 705 rotates with the rod 706 about the axis of the rod 706.

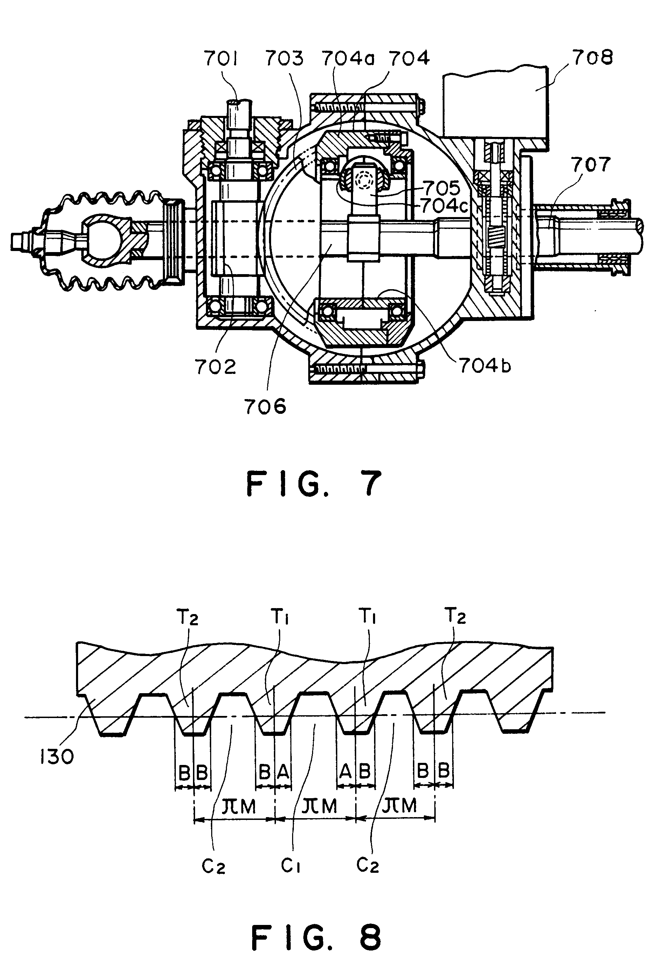

With the shaft 705 in the position shown in Fig. 7 (extending upwards), the input shaft 701 is rotated by the driver turning the steering wheel to rotate the worm wheel 703 counterclockwise, for example. The shaft 705 thereby moves to the left as viewed in Fig. 7 together with the rod 706, and the rear wheels are steered to the left, that is, in the same direction as (or in normal phase with) the front wheels and by an amount proportional to the amount of steering of the front wheels.

On the other hand, when the rod 706 has been driven by the motor 708 to rotate the shaft 705 through 180° to a position opposite the position shown in Fig. 7 (so as to extend downwards), rotation of the worm wheel 703 counterclockwise by the driver turning the steering wheel causes the shaft 705 to move to the right as viewed in Fig. 7 together with the rod 706, and the rear wheels are steered to the right, that is, in the opposite direction to (or in reverse phase with) the front wheels and by an amount proportional to the amount of steering of the front wheels.

When the shaft 705 has been rotated through 90° from the position shown in Fig. 7, the rod 706 does not move in response to the rotation of the worm wheel 703 and turning the steering wheel has no effect on the steering of the rear wheels. Therefore, the rear wheel to front wheel steering ratio can be continuously changed from a maximum with the front and rear wheels in normal phase to zero and from zero to a maximum with the front and rear wheels in reverse phase by controlling the rotational position of the shaft 705 by means of the motor 708.

In such a conventional rear wheels steering apparatus, however, a part of the steering torque used to steer the front wheels is mechanically transmitted to rotate the worm wheel 703. Therefore, mechanical means for transmitting the steering torque, such as a propeller shaft, is required. Since, however, space is greatly restricted in a passenger car, the use of the mechanical transmitting means, for which a large space is required, will reduce the space available inside the car, increase its weight, and cause a considerable loss in torque due to additional fiction.

A problem also arises where a motor is used to control rotation of the rod 706 or tilting of the double cylinder 704 by means of a reduction gear mechanism connected to the motor. If the reduction gear mechanism is provided with back lash to prevent interference during steering, then in the vicinity of the neutral position, in which the steering angle of the rear wheels is zero, a small relative movement occurs between intermeshing teeth owing to the back lash, which adversely affects the steering in the vicinity of the neutral position.

Further, it is necessary to detect the axial displacement, or stroke, of the rod in the axial direction in order to control the steering. Since, however, the rod moves axially while rotating, it is not easy to directly measure the rod stroke. A method of indirectly detecting rod stroke by providing the reduction gear mechanism with an indirect rod stroke detecting mechanism comprising an additional gear mechanism for an actuator is generally used. However, such a method results in accumulated back lash, which causes an error between the actual stroke and the detected value, leading to reduced control and a large so-called "dead zone".

Also, this error causes a delay in reaching a fail-safe state in the event of control system problems and therefore such an indirect rod stroke detecting mechanism is not well suited for vehicle mounting.

Another rear wheels steering apparatus for vehicles is disclosed in, for example, JP-A-5744568 and JP-A-6146763 comprising an electric motor, a steering mechanism for steering the rear wheels by transmitting the drive of the motor to the rear wheels, and a controller for controlling the motor in accordance with the steering wheel angle and the vehicle speed, for example.

This type of rear wheels steering apparatus has merit in that control is not limited as it is in the above-mentioned type of apparatus wherein a part of the steering torque used to steer the front wheels is transmitted to the rear wheels by, for example, a shaft or rod. For example, the rear wheels can be steered even when the front wheels steering angle is zero.

In an apparatus of the type mentioned in the last but one preceding paragraph, as a countermeasure in the event of electric motor failure, a clutch is generally provided for cutting off the transmission of power from the motor to the rear wheels together with a centering spring for returning the rear wheels to the neutral position.

Since the preset load for the centering spring is set to a considerably high value, the rear wheels will be rapidly and suddenly returned to the neutral position if the electric motor fails whilst the vehicle is turning, which could cause a safety problem. Also, an electric motor of larger size and greater output is necessary to cope with the high preset load, and the rear wheels cannot be steered quickly.

In an attempt to solve these problems, EP-A-0371851 discloses a vehicle rear wheels steering apparatus comprising a mechanical unit for steering the rear wheels, and a main motor and an auxiliary motor for driving the mechanical unit for controlling the steering of the rear wheels. Variable ratio steering control is effected by electronic means controlling one or both of the motors.

One of these motors is used as a spare if the other fails. However, since either a clutch for connecting the auxiliary motor to the mechanical unit, or two motors mounted in parallel are required, the apparatus will be larger. Also, since the auxiliary motor for use as a spare is rarely used, there is in practice a problem in controlling the operation thereof.

An object of the invention is to provide a vehicle rear wheels steering apparatus which avoids at least some of the disadvantages mentioned above and to this end the invention provides such an apparatus comprising:

a rotatable rod member moveable axially for steering the rear wheels;

a variable steering ratio mechanism for varying the steering ratio between the rear and front wheels of the vehicle, said mechanism comprising a projecting member, rotatably and axially moveable with said rod member, said projecting member projecting radially from said rod member into a guideway therefor which is tiltable relative to the axis of the rod member and rotatable about said axis;

a main motor for rotating said rod member about said axis thereof; and

an auxiliary motor for tilting said guideway relative to said axis;

the axial movement of the rod member being dependent upon rotational movement of the rod member and/or tilting movement of said guideway.

At least one of said motors is preferably connected with a respective reduction gear mechanism comprising a spiral groove formed at an outer periphery of a shaft, a ball nut having a corresponding spiral groove formed at an inner periphery thereof, a plurality of balls disposed in and between said corresponding spiral grooves, a rack formed on an outer side of said ball nut and a pinion engaging the teeth of said rack; said rack having two end portions and an intermediate portion therebetween, the spacing between adjacent teeth at the intermediate portion of the rack being smaller than the spacing between adjacent teeth at the end portions thereof.

The reduction gear mechanism is preferably adapted so that, with said variable steering ratio mechanism in a neutral position, the resultant force at the surface of respective engaging teeth of said rack and said pinion passes through an axially inner turn of said spiral groove of said ball nut.

Preferably, circumferentially extending axially spaced apart teeth on a portion of said rod member form a rack which engages a pinion mounted to an input shaft of a rotation detecting device for detecting axial displacement of said rod member.

A control means is preferably provided for controlling said main and auxiliary motors, such that each motor causes said variable steering ratio mechanism to set the steering angle of the rear wheels to zero if the other motor fails.

A control means is preferably provided for stopping the auxiliary motor for fixing the steering ratio during steering of the rear wheels.

In order that the invention may be well understood, two embodiments thereof, which are given by way of example only, will now be described with reference to the accompanying drawings, in which:

Fig. 1 is a side view showing a section through a vehicle rear wheels steering apparatus including a rod member;

Fig. 2 is a sectional view showing the apparatus taken on line II-II in Fig. 3;

Fig. 3 is a sectional view showing the apparatus taken on line III-III in Fig. 1;

Fig. 4 is a sectional view showing the apparatus taken on line IV-IV in Fig. 1, wherein the rod member has been rotated through 90°;

Fig. 5 is a sectional view showing the apparatus taken on line V-V in Fig. 4;

Fig. 6 is a graphical representation showing the axial displacement of the rod member, or rod stroke, against the rotational position of the rod member, or revolution, for different tilt angles of a guideway of the apparatus;

Fig. 7 is a sectional view showing a rear wheels steering apparatus according to the prior art;

Fig. 8 is an enlarged sectional view showing a rack of the apparatus of Fig. 1;

Fig. 9 is a sectional view showing a reduction gear mechanism of the apparatus of Fig. 1;

Fig. 10 is a sectional view of the apparatus of Fig. 1 taken on line X-X in Fig. 1;

Fig. 11 is a block diagram of a steering system of a vehicle;

Fig. 12 is a side view showing a section through another vehicle rear wheels steering apparatus including a rod member;

Fig. 13 is a sectional view showing the apparatus of Fig. 12 taken on line XIII-XIII in Fig. 12;

Fig. 14 is a sectional view showing the apparatus of Fig. 12 taken on line XIV-XIV in Fig. 12, wherein the rod member has been rotated through 90°;

Fig. 15 is a sectional view showing the apparatus of Fig. 12 taken on line XV-XV in Fig. 14;

Fig. 16 is a sectional view showing the apparatus of Fig. 12 taken on line XVI-XVI in Fig. 13;

Fig. 17 is a graphical representation showing a steering ratio characteristic for the apparatus of Fig. 12; and

Fig. 18 is a graphical representation of various characteristics for controlling a rear wheels steering angle of the apparatus of Fig. 12.

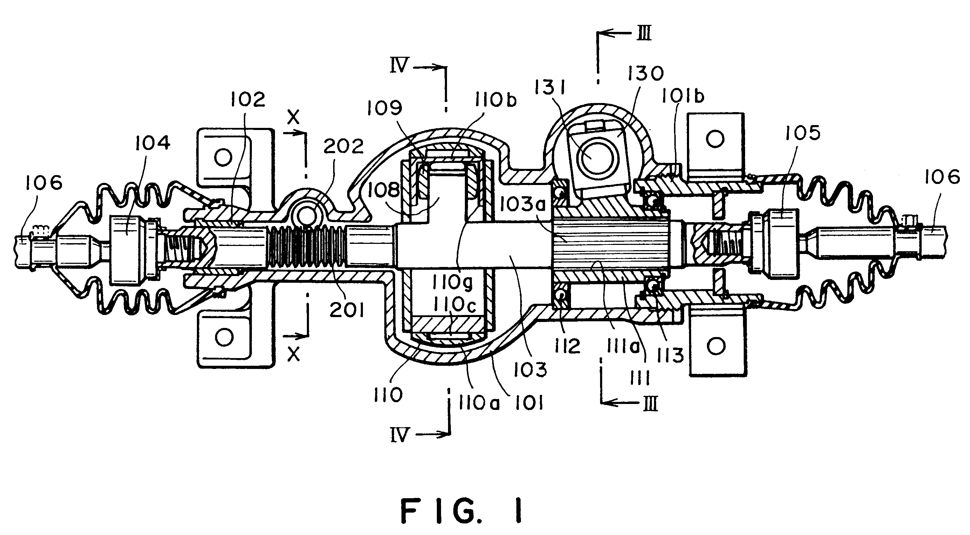

Referring now to the drawings, Fig. 1 shows a vehicle rear wheels steering apparatus having a housing 101 in which a rod member 103 is supported by a plain bearing 102 so as to be freely rotatable and freely moveable axially. Each end of the rod member 103 is rotatably connected with a respective steering rod 106, 107 through a respective ball joint 104, 105. Each steering rod 106, 107 is also connected with a respective steering mechanism (not shown) for a right or left rear wheel such that the rear wheels may be steered by moving the steering rods axially.

A projecting member, or operating member, consisting of a cylindrical shaft 108 projects radially from the rod member 103 at a central portion thereof. A sliding member 109 is fitted at a free end portion of the shaft 108. The outer peripheral surface of the sliding member 109 is part-spherical.

The illustrated apparatus also comprises a tiltable guide 110, which encloses the shaft 108. The guide 110 comprises an outer member 110a and an inner member 110b, which are both generally cylindrical, and a roller bearing 110c disposed therebetween such that the inner member 110b is rotatably supported by the outer member 110a. The sliding member 109 projects into a guideway, or opening 110g, provided in the inner member 110b. When the guide 110 is tilted, as will be described later, the part-spherical outer peripheral surface of the sliding member 109 prevents it from interfering with inner walls of the opening 110g.

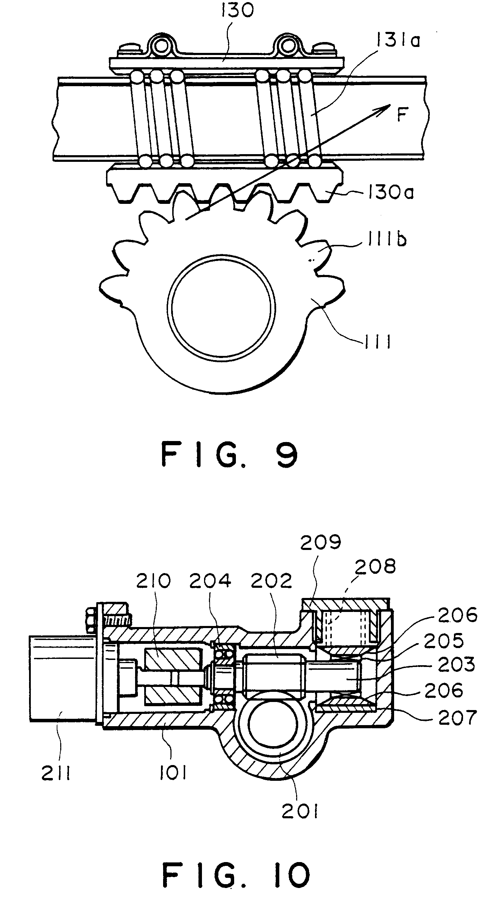

As shown in Fig. 10, a rod stroke, or axial displacement, detecting mechanism comprises circumferentially extending axially spaced apart teeth on a portion of the rod member 103 which form a rack 201. The rack engages a pinion 202 coaxially mounted to an input shaft 203 of a rotation detecting device, or sensor 211, for detecting axial displacement of the rod member 103. A first end of the shaft 203 (the left end as shown in Fig. 10) is supported by a self-aligning ball bearing 204, and its second end (the right end as shown in Fig. 10) is supported by a plain bearing 205. The plain bearing 205 is force fitted inside a cylindrical supporting member 206, a lower portion of which abuts a resilient spacer 207 supported against the housing 101, and an upper portion of which abuts a spring 208. The spring 208 is compressed by a cover 209 threadedly engaged with the housing 101 so as to exert an appropriate force on the cylindrical supporting member 206.

This arrangement reduces the back lash between the rack 201 and pinion 202, and allows the plain bearing 205 to move slightly upwards if the gear 202 receives an upwardly directed force from the rack 201. Therefore, the bearing can rotate smoothly and the error between the actual stroke and the detected value is reduced, leading to improved control and a small "dead zone".

The first end of the shaft 203 is connected with the rotation detecting sensor 211 through a coupling 210, and the rotation detecting sensor 211 detects a rotational displacement which corresponds to the stroke of the rod member 103. The rotation detecting sensor 211 is electrically connected with a control device (not shown), and the detected stroke of the rod member 103 is used by the control device as data for controlling the steering.

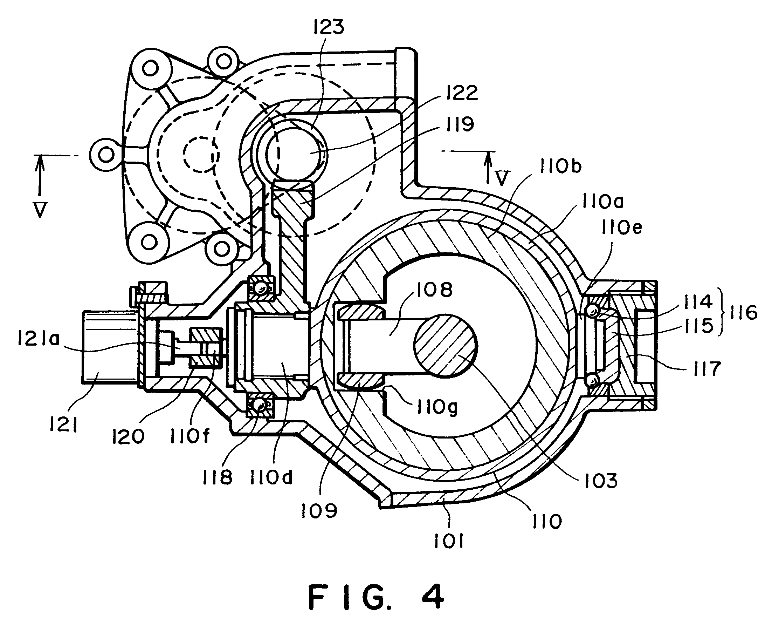

Fig. 4 shows the shaft 108 rotated through 90° from its position as shown in Fig. 1. The guide 110 further comprises pivot shafts 110d and 110e which project horizontally as shown in Fig. 4 from its radially outer periphery. The pivot shaft 110e is rotatably supported in the housing 101 by a bearing 116 comprising balls 114 and a race member 115. The race member 115 abuts a pressing member 117 having a threaded portion on its outer periphery which engages a corresponding threaded portion in the housing 101, such that the play of the bearing can be adjusted.

The pivot shaft 110d is fitted inside a hole disposed at the centre of rotation of a sector gear 119 so as to rotate as a unit together with the sector gear 119. The sector gear 119 is supported for rotation relative to the housing 101 through a bearing 118. A projection 110f extends coaxially from the free end of the pivot shaft 110d and is connected with an input shaft 121a of a tilt angle sensor 121 through a coupling 120. The rotation of the sector gear 119, that is, the amount of tilt of the guide 110, is measured by the tilt angle sensor 121, and can be used as data, for example, to control feedback in a control system. In Fig. 1 the guide 110 has a tilt angle of zero and it can only tilt counterclockwise from this condition.

The sector gear 119 engages a worm gear 123 formed on the outer periphery of an intermediate shaft 122 which is disposed above the sector gear 119.

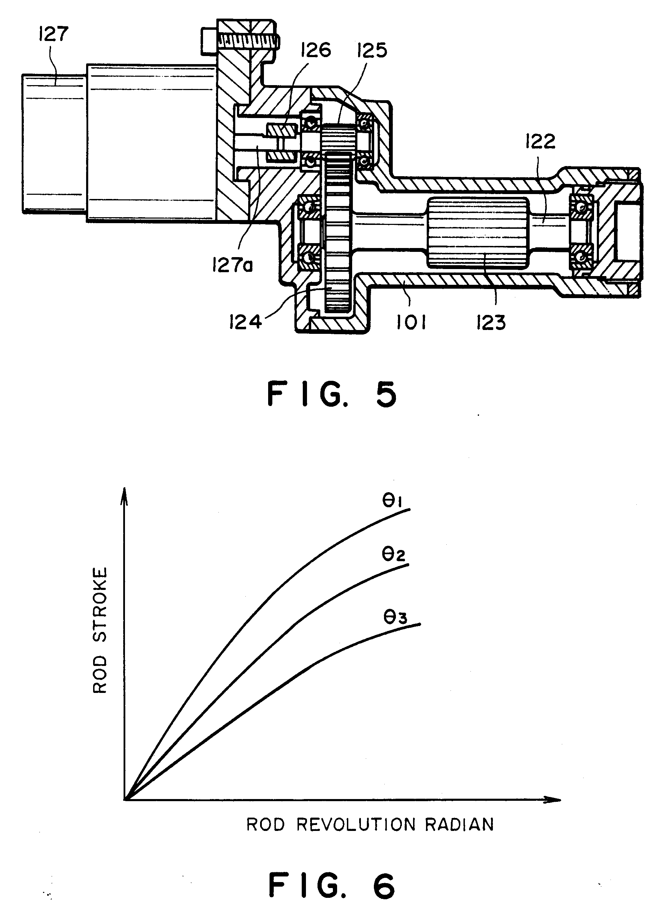

As shown in Fig. 5, the intermediate shaft 122 is rotatably supported by the housing 101, a larger gear 124 is coaxially mounted to one end of the intermediate shaft 122, and the larger gear 124 engages a rotatably supported smaller gear 125. The smaller gear 125 is connected with an output shaft 127a of an auxiliary motor 127 through a coupling 126.

Referring again to Fig. 1, the rod member 103 has first splines 103a over the entire periphery of a portion thereof. The first splines 103a engage second splines 111a of a pinion shaft 111 which is disposed around the rod member 103. The pinion shaft is therefore not rotatable relative to the rod member 103 but is axially movable relative thereto.

The pinion shaft 111 is rotatably supported in the housing 101 through bearings 112 and 113. A pressing cylinder 101b, threadedly engages the housing 101 so as to exert an axial force on the pinion shaft 111 through the bearing 113 such that the play of the bearings 112 and 113 can be adjusted.

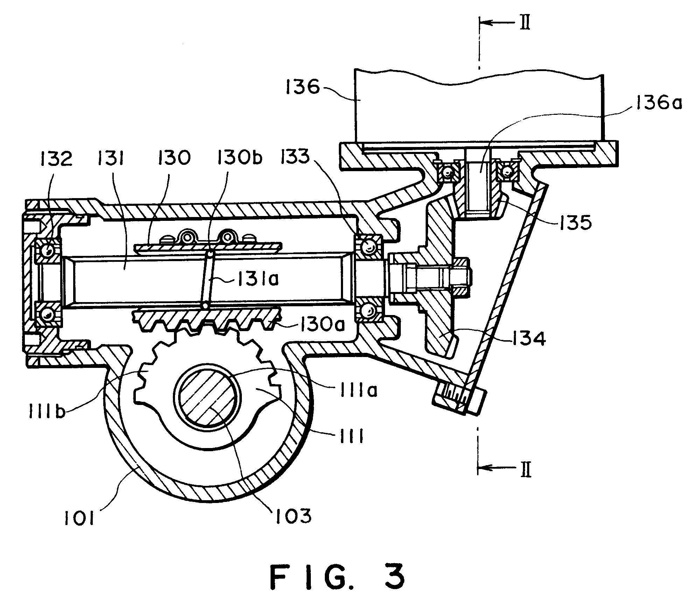

Fig. 3 shows a reduction gear mechanism of the apparatus. The pinion shaft 111 has a pinion 111b on a sector of its outer periphery which engages the teeth of a rack 130a formed on an outer side of a ball nut, or driving member 130.

A spiral groove 131a is formed at an outer periphery of a driving shaft 131 which is rotatably supported in the housing 101 through bearings 132 and 133. The ball nut has a corresponding spiral groove formed at an inner periphery thereof. A plurality of balls 130b are rollably disposed in and between the corresponding spiral grooves.

The driving member 130, the spiral groove 131a and the balls 130b therefore form a ball nut mechanism, and when the driving shaft 131 rotates, the driving member 130 moves axially according to the direction of rotation.

As shown in Fig. 8, the rack 130a has two end portions and an intermediate portion therebetween. The pitch of the rack 130a is fixed at $\pi M$ (where M is the module), but the pitch line thickness of each of two teeth $T_1$ at the intermediate portion of the rack 130a is $(A + B)$, that of each of two teeth $T_2$ at the end portions of the rack 130a is $(B + B)$, and $A > \pi M/4 > B$. That is, the spacing $C_1$ between adjacent teeth $T_1$ at the intermediate portion of the rack 130a is smaller than the spacing $C_2$ between adjacent teeth $T_1$, $T_2$ at the end portions thereof. Therefore, when a tooth of the pinion 111b engages a tooth $T_1$ of the rack 130a from within the spacing $C_1$, the back lash is comparatively small, and when a tooth of the pinion 111b engages a tooth of the rack 130a from within one of the spacings $C_2$, the back lash is comparatively large. Accordingly, the back lash between the pinion 111b and the rack 130a is small when in the neutral position, in which the steering angle of the rear wheels is almost zero. Therefore, the pinion shaft 111 will not idle in the neutral position and provides improved steering with reduced play, greater rigidity and more accurate and stable control.

On the other hand, when the steering angle of the rear wheels is substantial, the back lash between the pinion 111b and the rack 130a is greater, resulting in smoother steering without interference between the teeth of the rack 130a and pinion 111b.

Fig. 9 shows the direction of a resultant force F acting on a tooth of the rack 130a when the pinion 111b engages the rack 130a in the neutral position. As can be seen from Fig. 9, the resultant force F passes through an axially inner, rather than an axially outermost, turn of the spiral groove 131a. This prevents the driving member 130 from working loose when in the neutral position, and provides steering with a rigid feel.

As shown in Fig. 3, the driving shaft 131 has a larger bevel gear 134 at one end which engages a smaller bevel gear 135 mounted to an output shaft 136a of a main motor 136.

A controller is connected with the main motor 136 and with the auxiliary motor 127 and, in use, data such as the steering angle of the front wheels, the vehicle speed and yaw rate are input into the controller.

Control signals based mainly on the vehicle speed and yaw rate, for example, are transmitted from the controller to the auxiliary motor 127 and the output shaft 127a of the auxiliary motor 127 rotates by the required amount. The output shaft 127a rotates the sector gear 119 by the required amount through the gears 125 and 124. The rotation of the sector gear 119 tilts the guide 110 by the required amount.

Control signals based on the steering angle of the front wheels are transmitted from the controller to the main motor 136 so that the output shaft of the main motor 136 rotates in accordance with the steering of the front wheels.

The output shaft 136a of the main motor 136 rotates the driving shaft 131 through the bevel gears 135 and 134, and the driving member 130 is thereby moved axially by an amount determined by these control signals. The driving member 130 rotates the pinion shaft 111 so as to rotate the rod member 103 by the determined amount. This rotation of the rod member 103 causes the shaft 108 to rotate about the axis of the rod member 103. When the guide 110 is tilted, the shaft 108 rotates together with the guideway 110g and is guided so as to move in a spiral about the rod member 103, that is, the shaft 108 rotates about the axis of the rod member 103 and at the same time moves axially. The rod member 103 is thereby moved axially, and moves the steering rods 106, 107 to steer the rear wheels by the predetermined amount. Thus, the axial movement of the rod member 103 is dependent upon rotational movement of the rod member 103 and/or the tilting of the guideway 110g.

When the shaft 108 rotates to one side of the horizontal plane passing through the axis of the rod member 103, a normal phase ensues (the steering direction of the front wheels coincides with that of the rear wheels), and when the shaft 108 rotates to the other side of this horizontal plane, a reverse phase ensues (the steering direction of the front wheels is opposite to that of the rear wheels). Further, when the shaft 108 lies in this horizontal plane (that is, the rod member 103 is in the neutral position), a neutral phase ensues, wherein the steering angle of the rear wheels is always zero.

If the speeds of the front and rear wheels are different, it is necessary to change the steering angle of the rear wheels. Fig. 6 shows how the axial displacement of the rod member 103 varies with the rotational position thereof, measured from the neutral position thereof, for different values of $\theta$, where $\theta$ is the tilt angle of the guide 110 measured from the neutral position thereof and: $\theta_1 > \theta_2 > \theta_3$.

As can be seen from Fig. 6, the rod member 103 always moves further in the axial direction when $\theta = \theta_1$ than when $\theta = \theta_3$, regardless of the rotational position of the rod member 103. Therefore, by controlling the tilting of the guide 110 using the auxiliary motor 127, it is possible to control the rear wheel to front wheel steering ratio.

In the neutral position shown in Fig. 1, the tilt angle of the guide 110 is zero and the rear wheels are not steered at all irrespective of the steering angle of the front wheels.

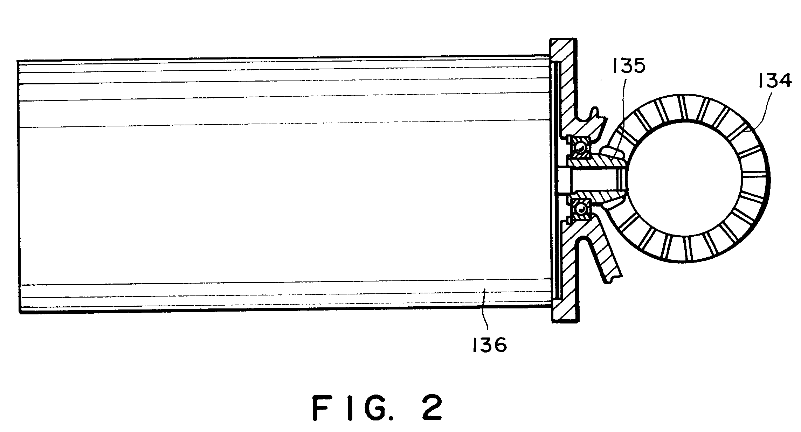

The apparatus described with reference to Figs. 1 to 10 thus provides a vehicle rear wheels steering apparatus with high controllability. Also, even if a problem occurs with system control signals, the apparatus is capable of quickly judging the abnormality and operating a fail-safe function, and is effective for safe control of the vehicle.

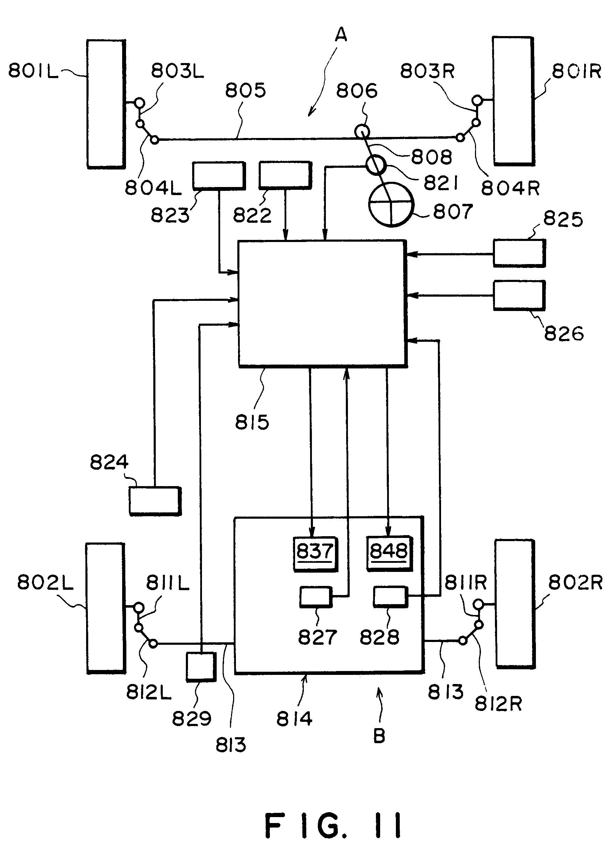

Fig. 11 is a block diagram of a steering system of a vehicle equipped with another vehicle rear wheels steering apparatus. This steering system comprises a front wheels steering apparatus A for steering left and right front wheels 801L and 801R, and a rear wheels steering apparatus B for steering left and right rear wheels 802L and 802R.

The front wheels steering apparatus A has a pair (left and right) of knuckle arms 803L and 803R, a pair (left and right) of steering rods, or tie rods 804L and 804R, a rod member, or relay rod 805, connected with the tie rods 804L and 804R, and a steering shaft 808 which has a pinion 806 provided at one end for engaging a rack (not shown) formed on the relay rod 805, and a steering wheel 807 provided at the other end. The front wheels steering apparatus A is adapted to steer the front wheels 801L and 801R by displacing the relay rod 805 in a direction lateral to the axis of the vehicle when the steering wheel 807 is turned.

On the other hand, the rear wheels steering apparatus B has a pair (left and right) of knuckle arms 811L and 811R, a pair (left and right) of steering rods, or tie rods 812L and 812R, a rear wheels steering mechanism 814 for steering the left and right rear wheels 802L and 802R by axially (that is, lateral to the axis of the vehicle) displacing a rod member, or relay rod 813, connected with the tie rods 812L and 812R, a control unit 815 for controlling the rear wheels steering mechanism 814, a main, or first, motor 837 and an auxiliary, or second, motor 848 as will be described in further detail hereinafter.

A steering wheel angle sensor 821 detects the steering wheel angle, a vehicle speed sensor 822 detects the vehicle speed, and lateral acceleration sensors 823 and 824 detect the lateral acceleration at the vehicle front and rear portions respectively.

Signals from the sensors 821 to 824, brake switch 825 and accelerator switch 826 are input into the control unit 815. Signals from various sensors in the rear wheels steering mechanism 814, that is, an encoder 827, a steering ratio sensor 828 and a rear wheels steering angle sensor 829, are also input into the control unit 815.

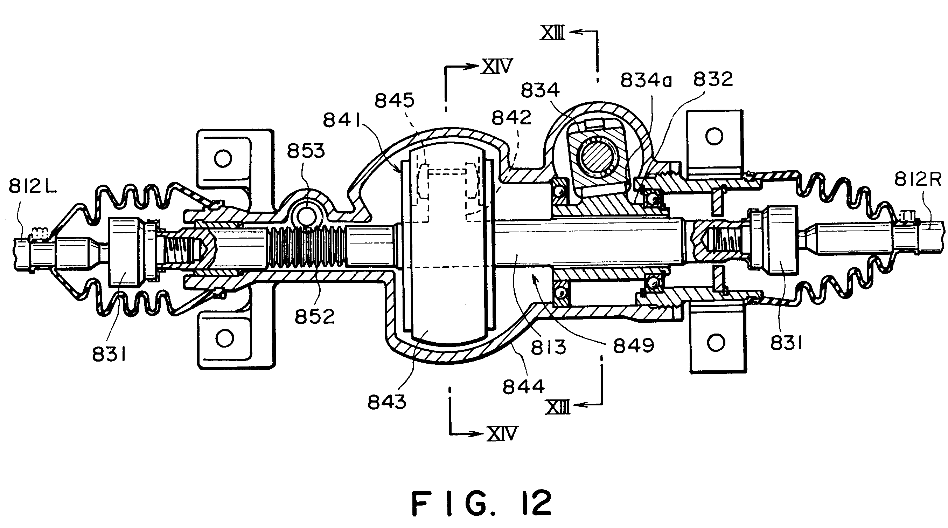

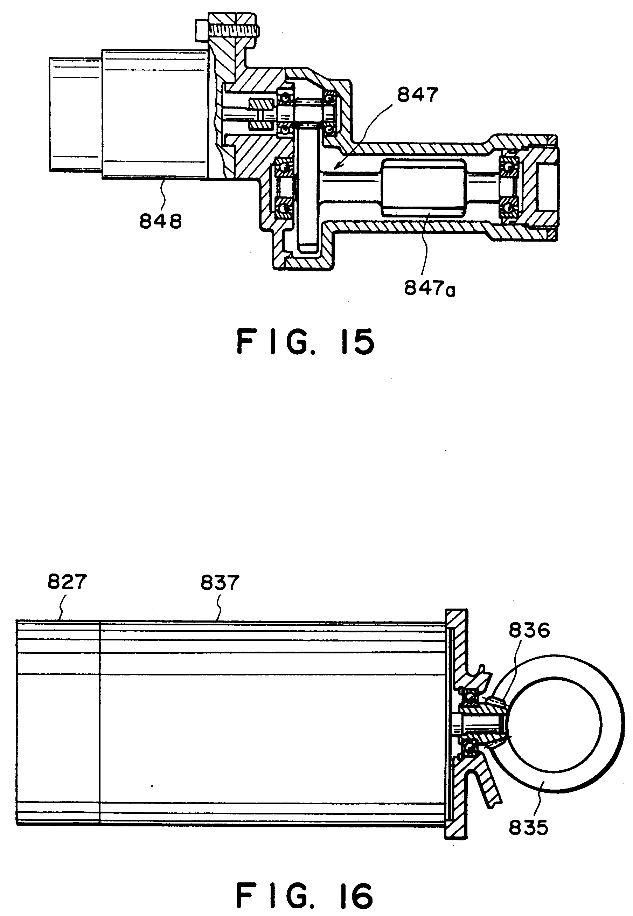

The rear wheels steering mechanism 814 is shown in more detail in Figs. 12 to 16. The left and right ends of the relay rod 813 are connected with the respective tie rods 812L and 812R through ball joints 831, and a pinion, or sector gear 832 is mounted to the relay rod 813 through splines so as to be axially movable relative thereto but rotatable as a unit therewith.

The sector gear 832 engages the teeth of a rack, or gear portion 834a, formed on an outer side of a ball nut 834 disposed on a driving shaft 833, and the shaft 833 is connected with the first motor 837 for being driven thereby through a set of bevel gears 835 and 836. Rotation of the first motor 837 moves the ball nut 834 axially on the shaft 833 and rotates the relay rod 813 about its axis by means of the sector gear 832. The first motor 837 is provided with the encoder 827, and operating information from the first motor 837 is output from the encoder 827 to the control unit 815.

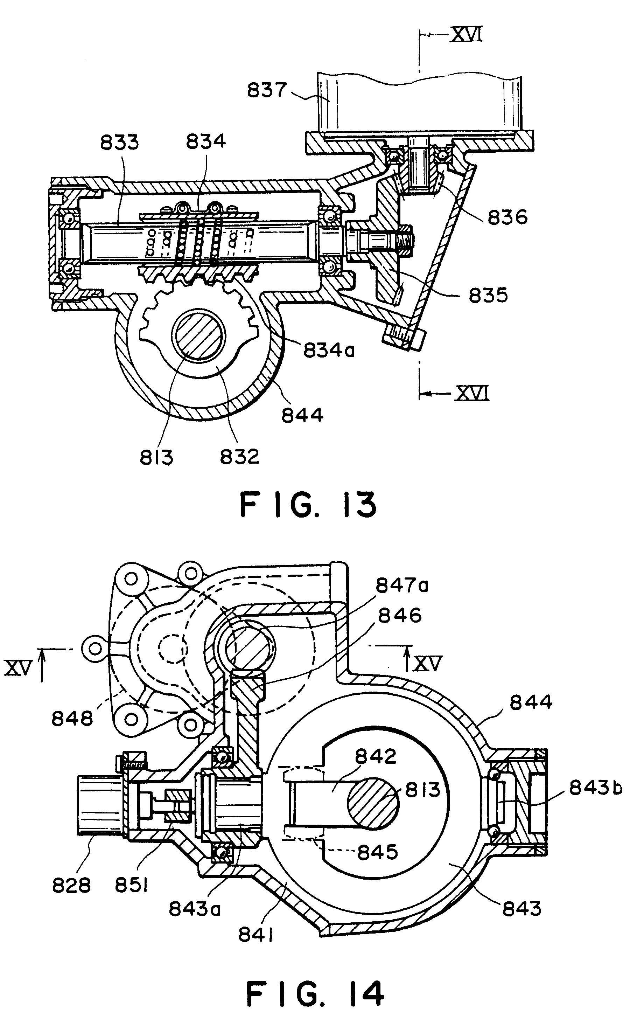

A variable steering ratio mechanism, indicated generally as 841 in Fig. 14, for varying the steering ratio $\theta$R/$\theta$F (the ratio of the rear wheels steering angle $\theta$R to the front wheels steering angle $\theta$F) comprises a projecting member 842 integral with the relay rod 813 and extending radially from the axis thereof, and a guide 843 disposed around the outer periphery of the relay rod 813 so as to enclose the projecting member 842.

The guide 843 has pivot shafts, or shaft portions 843a and 843b, which extend perpendicular to the axis of the relay rod 813, and is supported so as to be tiltable about the axis of the shaft portions 843a and 843b within a predetermined angular range relative to a housing 844. A part-spherical sliding member, or bush 845 is slidably fitted in a guideway, or inner peripheral surface, of the guide 843, and the free end of the projecting member 842 projects into the guideway and engages the bush 845.

A sector gear 846 is mounted to a shaft portion 843a of the guide 843 so as to rotate as a unit therewith, and engages a toothed portion 847a of a gear mechanism 847. The gear mechanism 847 is connected with the second motor 848. The second motor 848 drives the guide 843 to tilt about its shaft portions 843a and 843b, and the steering ratio $\theta$R/$\theta$F is determined by the tilt angle (Fig. 12 shows the guide having a tilt angle of zero).

If the relay rod 813 rotates whilst the guide 843 is tilted at a predetermined angle, that is, when the steering ratio $\theta$R/$\theta$F is any value other than zero, the bush 845 slides relative to the inner peripheral surface of the guide 843 to move the relay rod 813 axially. The axial movement of the relay rod 813 is thus dependent on the tilting movement of the guideway and/or the rotational movement of the relay rod 813.

The rear wheels steering apparatus B transmits a steering force to the rear wheels which is a combination of the drive of the first motor 837 and the drive of the second motor 848.

A tilt angle sensor, or steering ratio sensor 828, is connected with one shaft portion 843a of the guide 843 through a coupling 851, and detects the tilt angle of the guide 843. The steering ratio information is output to the control unit 815 from the steering ratio sensor 828. A rack, or gear portion 852, is formed on the outer peripheral surface of the relay rod 813, and engages a pinion 853 connected with the rear wheels steering angle sensor 829.

The rear wheels steering angle is detected by the rear wheels steering angle sensor 829 on the basis of the axial movement of the relay rod 813, and the rear wheels steering angle information is output from the rear wheels steering angle sensor 829 to the control unit 815.

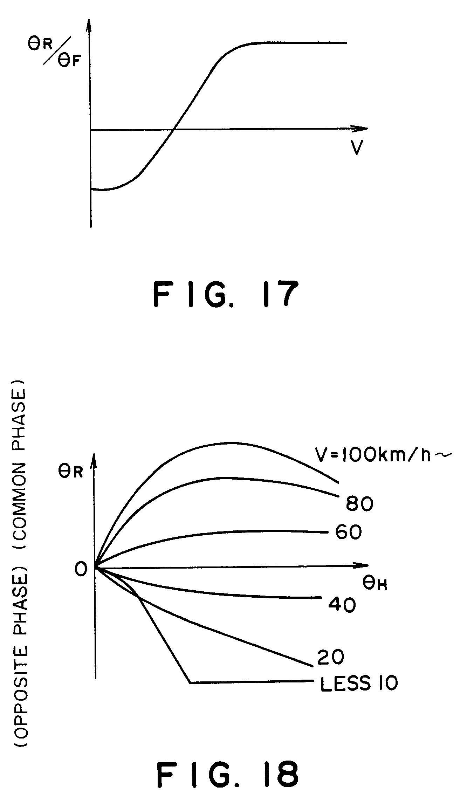

Control of the second motor 848 by the control unit 815 and the consequent control of the steering ratio $\theta$R/$\theta$F by the variable steering ratio mechanism 841 is normally based on the characteristics shown in the graphical representation of Fig. 17, where V represents vehicle speed. Control of the first motor 837 by the control unit 815 is based on the steering wheel angle $\theta$H. The rear wheels steering apparatus steers the rear wheels according to the characteristics shown in Fig. 18, where $\theta$R is the rear wheels steering angle, $\theta$H is the steering wheel angle and V is the vehicle speed.

On the other hand, when either of the first and second motors 837 and 848 fails, the control unit 815 detects the failure on the basis of signals from various sensors, for example the encoder 827, the steering ratio sensor 828 and the rear wheels steering angle sensor 829, in the rear wheels steering mechanism 814, and controls the first and second motors, so that the working motor causes the variable ratio steering mechanism to set the steering angle of the rear wheels to zero.

That is, if the first motor 837 fails, then the second motor 848 is driven to set the steering ratio $\theta$R/$\theta$F to zero. If the second motor 848 fails, then the first motor 837 is driven to set the rotational position of the relay rod 813 to zero. Therefore, safe operation is ensured in that the steering angle of the rear wheels 802L and 802R is set to zero when either the first motor 837 or the second motor 848 fails.

Moreover, since the motor 837 or 848 which is still working gradually sets the steering angle of the rear wheels 802L and 802R to zero, the rear wheels 802L and 802R are not returned rapidly as in known apparatuses in which the relay rod is returned to the neutral position by the force of a centering spring. Safety is thus further improved.

Also, a reduced steering force is required as compared to such known apparatuses, since it is not necessary to overcome the force of the centering spring. Therefore, the motors 837 and 848 can be reduced in size, their output can be reduced, and the rear wheels can be steered more quickly. Since no centering spring, clutch or the like is required, a further reduction in size of the rear wheels steering apparatus B is possible. It is therefore possible to manufacture a compact rear wheels steering apparatus, reduce losses in the driving torque and improve control.

Control of the first and second motors 837 and 848 by the control unit 815 is not limited to that so far described. For example, the steering ratio $\theta R/\theta F$ may be fixed at a predetermined value other than zero by stopping the second motor 848 while the steering of the rear wheel is being controlled by the first motor 837, and is effective in preventing oscillation phenomena resulting from simultaneous operation of both motors 837 and 848.

## Claims

1. A vehicle rear wheels steering apparatus comprising:

    a rotatable rod member (103, 813) moveable axially for steering the rear wheels;

    a variable steering ratio mechanism (---, 841) for varying the steering ratio ($\theta R/\theta F$) between the rear and front wheels of the vehicle, said mechanism comprising a projecting member (108, 842), rotatably and axially moveable with said rod member, said projecting member projecting radially from said rod member into a guideway (110g, ---) therefor which is tiltable relative to the axis of the rod member and rotatable about said axis;

    a main motor (136, 837) for rotating said rod member about said axis thereof; and

    an auxiliary motor (127, 848) for tilting said guideway relative to said axis;

    the axial movement of the rod member being dependent upon rotational movement of the rod member and/or tilting movement of said guideway.

2. An apparatus as claimed in claim 1, wherein at least one of said motors (136, 837) is connected with a respective reduction gear mechanism comprising a spiral groove (131a) formed at an outer periphery of a shaft (131, 833), a ball nut (130, 834) having a corresponding spiral groove formed at an inner periphery thereof, a plurality of balls disposed in and between said corresponding spiral grooves, a rack (130a, 834a) formed on an outer side of said ball nut (130, 834) and a pinion (111b, ---) engaging the teeth of said rack (130a, 834a); said rack having two end portions and an intermediate portion therebetween, the spacing between adjacent teeth ($T_1$) at the intermediate portion of the rack being smaller than the spacing between adjacent teeth ($T_1$, $T_2$) at the end portions thereof.

3. An apparatus as claimed in claim 2, wherein said reduction gear mechanism is adapted so that, with said variable steering ratio mechanism (---, 841) in a neutral position, the resultant force (F) at the surface of respective engaging teeth of said rack (130a, 834a) and said pinion (111b, ---) passes through an axially inner turn of said spiral groove of said ball nut (130, 834).

4. An apparatus as claimed in any one of the preceding claims, wherein circumferentially extending axially spaced apart teeth on a portion of said rod member (103, 813) form a rack (201, 852) which engages a pinion (202, 853) mounted to an input shaft (203) of a rotation detecting device (211) for detecting axial displacement of said rod member (103, 813).

5. An apparatus as claimed in any one of the preceding claims, wherein a control means (---, 815) is provided for controlling said main (136, 837) and auxiliary (127, 848) motors, such that each motor causes said variable steering ratio mechanism (---, 841) to set the steering angle ($\theta R$) of the rear wheels to zero if the other motor fails.

6. An apparatus as claimed in any one of the preceding claims, wherein a control means (---, 815) is provided for stopping the auxiliary motor for fixing the steering ratio ($\theta R/\theta F$) during steering of the rear wheels.

## Patentansprüche

1. Eine Hinterrad-Lenkvorrichtung für ein Fahrzeug, umfassend:

    ein drehbares Stangenelement (103, 813) das axial zum Lenken der Hinterräder bewegbar ist;

    einen Mechanismus für ein veränderbares Lenkverhältnis (---, 841) zum Ändern des Lenkverhältnisses ($\theta R/\theta F$) zwischen den Hinter- und Vorderrädern des Fahrzeugs, wobei der genannte Mechanismus ein hervorstehendes Teil (108, 842) umfaßt, das mit dem genannten Stangenelement drehbar und axial bewegbar ist, wobei das hervorstehende Teil radial von dem genannten Stangenelement in eine Führungsbahn (110g, ---) davon hervorsteht, die in bezug auf die Achse des Stangenelements neigbar und um die genannte Achse drehbar ist;

einen Hauptmotor (136, 837) zum Drehen des genannten Stangenelements um seine genannte Achse; und

einen Zusatzmotor (127, 848) zum Neigen der genannten Führungsbahn in bezug auf die genannte Achse;

wobei die axiale Bewegung des Stangenelements von der Drehbewegung des Stangenelements und/oder der Neigungsbewegung der genannten Führungsbahn abhängt.

2. Vorrichtung, wie in Anspruch 1 beansprucht, in der mindestens einer der genannten Motoren (136, 837) mit einem entsprechenden Untersetzungsmechanismus verbunden ist, der umfaßt eine Spiralnut (131a), die auf einem Außenumfang einer Welle (131, 833) gebildet ist, eine Kugelmutter (130, 834), die an ihrem Innenumfang eine entsprechend geformte Spiralnut aufweist, eine Vielzahl von Kugeln, die in und zwischen den genannten entsprechenden Spiralnuten angeordnet sind, eine Zahnstange (130a, 834a), die auf einer Außenseite der genannten Kugelmutter (130, 834) gebildet ist, und ein Ritzel (111b, ---), das an den Zähnen der genannten Zahnstange (130a, 834a) eingreift; die genannte Zahnstange weist zwei Endabschnitte und dazwischen einen Zwischenabschnitt auf, wobei der Abstand zwischen benachbarten Zähnen ($T_1$) in dem Zwischenabschnitt der Zahnstange kleiner als der Abstand zwischen benachbarten Zähnen ($T_1$, $T_2$) an den Endbereichen davon ist.

3. Eine Vorrichtung, wie in Anspruch 2 beansprucht, in der der genannte Untersetzungsmechanismus bei dem genannten Mechanismus für ein veränderbares Lenkverhältnis (---, 841) in einer neutralen Position die Kraftresultierende (F) an der Oberfläche entsprechender Eingriffzähne der genannten Zahnstange (130a, 834a) und dem genannten Ritzel (111b, ---) durch eine axiale, innere Windung der genannten Spiralnut der genannten Kugelmutter (130, 834) hindurchgehen lassen kann.

4. Eine Vorrichtung, wie in irgendeinem der vorhergehenden Ansprüche beansprucht, in der sich umfangsmäßig erstreckende, axial beabstandete Zähne an einem Abschnitt des genannten Stangenelements (103, 813) eine Zahnstange (201, 852) bilden, die an einem Ritzel (202, 853) eingreift, das an einer Eingangswelle (203) der Dreherfassungseinrichtung (211) zum Erfassen der axialen Verschiebung des genannten Stangenelements (103, 813) angebracht ist.

5. Eine Vorrichtung, wie in irgendeinem der vorhergehenden Ansprüche beansprucht, in der eine Steuerungseinrichtung (---, 815) zum Steuern des genannten Haupt- (136, 837) und Zusatzmotors (127, 848) so vorgesehen ist, daß jeder Motor den genannten Mechanismus für ein veränderbares Lenkverhältnis (---, 841) veranlaßt, den Lenkwinkel ($\theta$R) der Hinterräder auf null zu setzen, wenn der andere Motor versagt.

6. Eine Vorrichtung, wie in irgendeinem der vorhergehenden Ansprüche beansprucht, in der eine steuerungseinrichtung (---, 815) vorgesehen ist, um den Zusatzmotor anzuhalten, um das Lenkverhältnis ($\theta$R/$\theta$F) während des Lenkens der Hinterräder festzulegen.

**Revendications**

1. Appareil de direction des roues arrière d'un véhicule, comportant :

un élément formant tige (103,813) pouvant être mis en rotation, mobile axialement pour changer la direction des roues arrière,

un mécanisme (...,841) à rapport de direction variable destiné à faire varier le rapport de direction ($\theta_R/\theta_F$) entre les roues arrière et avant du véhicule, ledit mécanisme comportant un élément (108,842) en saillie, pouvant être mis en rotation et mobile axialement avec ledit élément formant tige, ledit élément en saillie faisant saillie radialement à partir dudit élément formant tige à l'intérieur d'un guide (110g,...) destiné à celui-ci qui peut basculer par rapport à l'axe de l'élément formant tige et peut tourner autour dudit axe,

un moteur principal (136,837) pour mettre en rotation ledit élément formant tige autour de son dit axe, et

un moteur auxiliaire (127,848) pour faire basculer ledit guide par rapport audit axe,

le déplacement axial de l'élément formant tige étant fonction du déplacement en rotation de l'élément formant tige et/ou du déplacement en basculement dudit guide.

2. Appareil selon la revendication 1 dans lequel au moins un desdits moteurs (136,837) est de préférence relié à un mécanisme respectif de réduction à engrenages comportant une gorge en spirale (131a) formée au niveau d'une périphérie extérieure d'un arbre (131,833), un écrou à bille (130,834) ayant une gorge correspondante en spirale formée au niveau de sa périphérie intérieure, plusieurs billes agencées dans lesdites gorges correspondantes en spirale et entre celles-ci, une crémaillère (130a,834a) formée sur un côté extérieur dudit écrou à billes (130,834) et un pignon (111b,...) venant en prise avec les dents de ladite crémaillère (130a,834a), ladite crémaillère ayant deux parties d'extrémité et une partie intermédiaire située entre celles-ci, l'écartement entre des dents adjacentes ($T_1$) situées au niveau de la partie intermédiaire de la crémaillère étant plus petit que l'écartement existant entre des dents adjacentes ($T_1,T_2$) situées au niveau des parties d'extrémité de celle-ci,

3. Appareil selon la revendication 2 dans lequel ledit mécanisme de réduction à engrenages est adapté de telle-sorte que, ledit mécanisme (...,841) à rapport de direction variable étant dans la position neutre, la force résultante (F) au niveau de la surface des dents respectives mises en prise de ladite crémaillère (130a,834a) et dudit pignon (111b,...) passe à travers une spire axialement intérieure de ladite gorge en spirale dudit écrou a billes (130,834).

4. Appareil selon l'une quelconque des revendications précédentes dans lequel des dents axialement écartées s'étendant circonférentiellement sur une partie dudit élément formant tige (103,813) forment une crémaillère (201,852) qui vient en prise avec un pignon (202,853) monté sur un arbre d'entrée (203) d'un dispositif (211) de détection de mise en rotation destiné à détecter un déplacement axial dudit élément formant tige (103,813).

5. Appareil selon l'une quelconque des revendications précédentes dans lequel des moyens de commande (...,815) sont agencés pour commander ledit moteur principal (136,837) et ledit moteur auxiliaire (127,848), de telle sorte que chaque moteur entraîne ledit mécanisme (...,841) à rapport de direction variable à établir l'angle de direction ($\theta_R$) des roues arrière à zéro si l'autre moteur tombe en panne.

6. Appareil selon l'une quelconque des revendications précédentes dans lequel des moyens de commande (...,815) sont de préférence agencés pour arrêter le moteur auxiliaire pour fixer le rapport de direction ($\theta_R/\theta_F$) pendant un changement de direction des roues arrière.

FIG. 1

FIG. 2

F I G. 3

F I G. 4

# FIG. 5

ROD STROKE

θ1
θ2
θ3

ROD REVOLUTION RADIAN

# FIG. 6

FIG. 7

FIG. 8

17

F I G. 9

F I G. 10

F I G. II

FIG. 12

F I G. 13

F I G. 14

FIG. 15

FIG. 16

$$\frac{\theta_R}{\theta_F}$$

FIG. 17

FIG. 18